(19) **Europäisches Patentamt**
**European Patent Office**
**Office européen des brevets**

(11) **EP 3 071 364 B1**

(12) **EUROPEAN PATENT SPECIFICATION**

(45) Date of publication and mention
of the grant of the patent:
**07.07.2021 Bulletin 2021/27**

(21) Application number: **14766585.5**

(22) Date of filing: **27.08.2014**

(51) Int Cl.:
**B23K 35/36** *(2006.01)*     **B23K 35/368** *(2006.01)*
**B23K 35/40** *(2006.01)*     **B23K 35/02** *(2006.01)*

(86) International application number:
**PCT/US2014/053020**

(87) International publication number:
**WO 2015/076890 (28.05.2015 Gazette 2015/21)**

(54) **LOW-MANGANESE WELDING WIRE**

SCHWEISSDRAHT MIT GERINGEM MANGANANTEIL

FIL DE SOUDAGE À FAIBLE TENEUR DE MANGANÈSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2013 US 201314086758**

(43) Date of publication of application:
**28.09.2016 Bulletin 2016/39**

(73) Proprietor: **Hobart Brothers Company
Troy, Ohio 45373 (US)**

(72) Inventors:
• **AMATA, Mario Anthony
Glenview, Illinois 60025 (US)**
• **BUNDY, Joseph C.
Glenview, Illinois 60025 (US)**

• **BARHORST, Steven Edward
Glenview, Illinois 60025 (US)**
• **FIORE, Susan Renata
Glenview, Illinois 60025 (US)**
• **DUNCAN, Daryl L.
Glenview, Illinois 60025 (US)**

(74) Representative: **Trinks, Ole
Meissner Bolte Patentanwälte
Rechtsanwälte Partnerschaft mbB
Postfach 10 26 05
86016 Augsburg (DE)**

(56) References cited:
**EP-A2- 1 226 897      GB-A- 739 375
US-A- 3 513 289      US-A- 3 702 390
US-A1- 2004 026 396      US-A1- 2008 272 100**

• **NONE**

**Description**

BACKGROUND

The invention relates generally to welding and, more specifically, to electrodes for arc welding, such as Gas Metal Arc Welding (GMAW) or Flux Core Arc Welding (FCAW).

US 3 513 289 A describes welding electrodes having higher manganese contents (up to 1,3 %) included in the core, but quite low nickel contents and no agglomerated TiO2. EP 1 226 897 A2 also discloses the use of essential amounts of manganese powder in the core, i.e. 0,5 to 3,75% by weight, whereas the nickel content again is very low.

Welding is a process that has become ubiquitous in various industries for a variety of applications. For example, welding is often used in applications such as shipbuilding, offshore platform, construction, pipe mills, and so forth. Certain welding techniques (e.g., Gas Metal Arc Welding (GMAW), Gas-shielded Flux Core Arc Welding (FCAW-G), Self-shielded Flux Core Arc Welding (FCAW-S), and Submerged Arc Welding (SAW)), typically employ a welding electrode in the form of welding wire. Welding wire may generally provide a supply of filler metal for the weld as well as provide a path for the current during the welding process.

BRIEF DESCRIPTION

One embodiment of the present invention refers to a tubular welding wire as defined in claim 1 including a sheath and a core. The tubular welding wire is configured to form a weld deposit on a structural steel workpiece.

Another embodiment discloses a method of manufacturing a welding electrode as defined in claim 4. It includes disposing a granular core within a metallic sheath to form the welding electrode.

Further features of the present invention are disclosed in the subclaims.

DRAWINGS

These and other features, aspects, and advantages of the present invention will become better understood when the following detailed description is read with reference to the accompanying drawings in which like characters represent like parts throughout the drawings, wherein:

FIG. 1 is a block diagram of a gas metal arc welding (GMAW) system, in accordance with embodiments of the present disclosure;

FIG. 2 is a cross-sectional view of a tubular welding wire, in accordance with embodiments of the present disclosure;

FIG. 3 is a process by which the tubular welding wire may be used to weld a workpiece, in accordance with embodiments of the present disclosure; and

FIG. 4 is a process for manufacturing the tubular welding wire, in accordance with embodiments of the present disclosure.

DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. It should be appreciated that, as used herein, the term "tubular welding electrode" or "tubular welding wire" may refer to any welding wire or electrode having a metal sheath and a granular or powdered core, such as metal-cored or flux-cored welding electrodes. It should be appreciated that the term "tubular," as used herein, may include various shapes of welding wire, including round, elliptical, square, polygonal, or any other suitable shape.

Certain types of welding wire (e.g., tubular welding wire) may include one or more components (e.g., flux, arc stabilizers, or other additives) that may generally alter the welding process and/or the properties of the resulting weld. For example, rutile is a mineral, primarily composed of titanium dioxide ($TiO_2$), which may also include compounds of iron (Fe), niobium (Nb), tantalum (Ta), vanadium (V), and/or other impurities. Furthermore, rutile may be included in some types of welding wires, such as T-1 welding wires (e.g., AWS A5.20 EXXT-1, A5.29 EXXT1-YY, A5.36 EXXT-1, and EXXT1-YY). By further example, certain types of welding wires may include a substantial quantity of manganese (Mn) (e.g., greater than 3.5% by weight) to function as a deoxidizer and/or an alloying metal for the resulting weld. That is, this manganese content may react with oxygen near the welding environment to form oxides of manganese (e.g., manganese oxide (MnO) and/or manganese dioxide ($MnO_2$)) that flow into the slag and/or transfer into the weld pool becoming incorporated into the weld metal to become an inclusion within the resulting weld. In general, manganese may form alloys with certain metals (e.g., steel) to provide improved strength, ductility, and toughness. In certain environments, the manganese may act as a deoxidizer reacting with oxygen (e.g., from the atmosphere) in order to block (e.g., limit or prevent) this oxygen from remaining in the weld deposit. Similarly, manganese may react with and remove sulfur from the welding environment. Furthermore, manganese in a welding wire may help to control the weld puddle (e.g., by improving the wetting of the workpiece).

However, despite these effects, it may be desirable, in certain situations, to utilize a low-manganese welding wire. For example, a welding wire having low manganese content (e.g., less than 3.5%, less than 3%, less than 2.5%, less than 2%, less than 1.5%, less than 1%, less than 0.5%, less than 0.35%, or less than 0.25% manganese by weight) may volatilize only a small quantity of manganese during the welding operation. Accordingly, the present disclosure is directed toward systems and methods for welding wires having low manganese content that may be used to produce welds having a low manganese content (e.g., less than approximately 2.5%, less than approximately 2%, less than approximately 1.5%, less than approximately 1%, less than approximately 0.5%, less than approximately 0.4%, or less than 0.3% manganese by weight) while still providing suitable weld properties (e.g., tensile strength, ductility, toughness, and so forth) when welding structural steel (e.g., mild steels, low-alloy steels, carbon steels, or other suitable structural steel) workpieces. In other words, the presently disclosed welding wires generally maintain the weld quality (e.g., a weld having a reasonable level of inclusions, good strength, and/or good toughness) when welding structural steels despite the reduced manganese content in the resulting weld deposit.

In certain embodiments, the disclosed welding wires achieve the aforementioned welding properties and weld quality despite the low manganese content, at least in part, through the use of a purified, agglomerated titanium dioxide component. For example, the granular core of certain presently disclosed tubular welding wire embodiments includes pigment-grade $TiO_2$ that has been agglomerated with binding and/or drying agents (e.g., sodium silicate, potassium silicate, lithium fluoride, and/or other binding or drying agents). Furthermore, certain embodiments of the presently disclosed welding wire may include high levels of deoxidizers (e.g., zirconium, aluminum, magnesium, silicon, and/or other suitable deoxidizers) to generally deter (e.g., block) oxygen incorporation into the weld metal. Accordingly, as set forth below, the presently disclosed tubular welding wires enable the formation of weld deposits having relatively low manganese content (e.g., generally less than approximately 2.5% by weight) on structural steel workpieces while still affording good weld properties (e.g., tensile strength, ductility, toughness, and so forth).

Furthermore, during the welding operation, the disclosed tubular welding wire enables the weld bead to smoothly wet into the side walls, forming a weld deposit having excellent toughness and excellent matching strength to the base material. That is, the disclosed tubular welding wire enables the welder to duplicate the strength, ductility, toughness and hardness specifications of qualified joint procedures on structural steel workpieces, enabling the welder to attain X-ray quality welds. Certain embodiments of the disclosed tubular welding wire also enable an easily removable slag (e.g., nearly self-removing slag) for easy cleaning and pre-painting preparation of the workpiece. The disclosed tubular welding wire enables nearly spatter-free weld operation when using high argon/carbon dioxide shielding gas mixtures. The relatively low oxidation potential of the shielding gas mixture and the vapor pressure control of the disclosed welding system enable an exceedingly low fume generation rate for an open arc semi-automatic welding processes. This reduced fume rate enhances arc clarity, enabling welders to perform to their highest skill level. Further, for certain embodiments, the absence of manganese metal powder in the granular core formulation may significantly lessen the concentration of manganese in these welding fumes. That is, in certain embodiments, the disclosed tubular welding wire enables significantly lower manganese fume emission rates per pound of welding electrode consumed when compared to other welding electrodes.

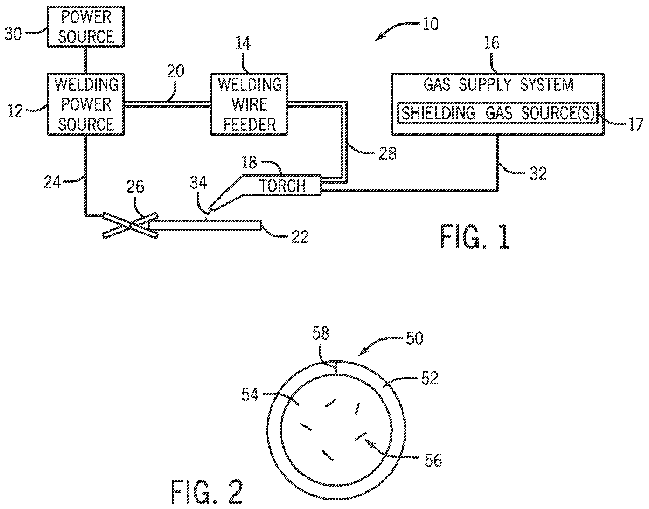

Turning to the figures, FIG. 1 illustrates an embodiment of a gas metal arc welding (GMAW) system 10 that utilizes tubular welding wire, in accordance with the present disclosure. It should be appreciated that, while the present discussion may focus specifically on the GMAW system 10 illustrated in FIG. 1, the presently disclosed welding wire may benefit a number of different welding processes (e.g., FCAW-S, FCAW-G, GTAW, SAW, or similar welding processes) that use a welding wire. The welding system 10 includes a welding power source 12, a welding wire feeder 14, a gas supply system 16, and a welding torch 18. The welding power source 12 generally supplies power to the welding system 10 and may be coupled to the welding wire feeder 14 via a cable bundle 20. The welding power source 12 may also be coupled to a workpiece 22 using a lead cable 24 having a clamp 26. In the illustrated embodiment, the welding wire feeder 14 is coupled to the welding torch 18 via a cable bundle 28 in order to supply consumable, tubular welding wire (e.g., the welding electrode) and power to the welding torch 18 during operation of the welding system 10. In another embodiment, the welding power source 12 may couple and directly supply power to the welding torch 18.

The welding power source 12 may generally include power conversion circuitry that receives input power from an alternating current power source 30 (e.g., an AC power grid, an engine/generator set, or a combination thereof), conditions the input power, and provides DC or AC output power via the cable 20. For example, in certain embodiments, the power source 30 may be a constant voltage (CV) power source 30. The welding power source 12 may power the welding wire feeder 14 that, in turn, powers the welding torch 18, in accordance with demands of the welding system 10. The lead cable 24 terminating in the clamp 26 couples the welding power source 12 to the workpiece 22 to close the circuit between the welding power source 12, the workpiece 22, and the welding torch 18. The welding power source 12 may include circuit elements (e.g., transformers, rectifiers, switches, and so forth) capable of converting the AC input power to a direct current electrode positive (DCEP) output, direct current electrode negative (DCEN) output, DC variable polarity, pulsed DC, or a variable balance (e.g., balanced or unbalanced) AC output, as dictated by the demands of the welding system 10. It should be appreciated that the presently disclosed tubular welding wire may enable improvements to the welding process (e.g., improved arc stability and/or improved weld quality) for a number of different power configurations.

The illustrated welding system 10 includes a gas supply system 16 that supplies a shielding gas or shielding gas mixtures from one or more shielding gas sources 17 to the welding torch 18. In the depicted embodiment, the gas supply system 16 is directly coupled to the welding torch 18 via a gas conduit 32. In another embodiment, the gas supply system 16 may instead be coupled to the wire feeder 14, and the wire feeder 14 may regulate the flow of gas from the gas supply system 16 to the welding torch 18. In other embodiments, such as certain FCAW-S and SAW systems that do not rely on an externally supplied shielding gas, the welding system 10 may not include the gas supply system 16. A shielding gas, as used herein, may refer to any gas or mixture of gases (e.g., inert or active gasses) that may be provided to the arc and/or weld pool in order to provide a particular local atmosphere (e.g., to shield the arc, improve arc stability, limit the formation of metal oxides, improve wetting of the metal surfaces, alter the chemistry of the weld deposit, and so forth).

In certain embodiments, the shielding gas flow may be a shielding gas or shielding gas mixture (e.g., argon (Ar), helium (He), carbon dioxide ($CO_2$), oxygen ($O_2$), nitrogen ($N_2$), hydrogen ($H_2$), similar suitable shielding gases, or any mixtures thereof). For example, a shielding gas flow (e.g., delivered via the gas conduit 32) may include Ar, $CO_2$, Ar/$CO_2$ mixtures (e.g., 75% Ar and 25% $CO_2$, 90% Ar and 10% $CO_2$, 95% Ar and 5% $CO_2$, and so forth), Ar/$CO_2$/$O_2$ mixtures, Ar/He mixtures, and so forth. Further, it may be appreciated that, as set forth in detail below, certain shielding gases (e.g., certain Ar/$CO_2$ mixtures, such as 90% Ar / 10% $CO_2$) may reduce a total amount of welding fumes that may be generated during the welding operation. For example, in certain embodiments, the shielding gas flow may include between approximately 0% and 100% $CO_2$, with the remainder of the shielding gas flow being argon, helium, or another suitable gas. In certain embodiments, shielding gas flows including three or more gases (e.g., trimix) are also presently contemplated. Additionally, in certain embodiments, the shielding gas mixture may be provided to the arc at a rate of approximately 35 cubic feet per hour (cfh) to approximately 55 cfh (e.g., approximately 40 cfh).

Accordingly, the illustrated welding torch 18 generally receives the tubular welding wire from the welding wire feeder 14, power from the welding power source 12, and a shielding gas flow from the gas supply system 16 in order to perform GMAW of the workpiece 22. In certain embodiments, the welding wire feeder 14 may be a constant speed welding wire feeder 14. During operation, the welding torch 18 may be brought near the workpiece 22 so that an arc 34 may be formed between the consumable welding electrode (i.e., the welding wire exiting a contact tip of the welding torch 18) and the workpiece 22. In certain embodiments, the welding torch 18 and welding wire feeder 14 may be configured to provide a nearly constant contact tip-to-workpiece distance of between approximately 0.75 inch and approximately 1 inch. Additionally, as discussed below, by controlling the composition of the tubular welding wire, the chemical and mechanical properties of the resulting weld may be varied. For example, the tubular welding wire may include a deoxidizing component to react with and remove undesired species (e.g., oxygen, metal oxides, or other undesired oxygen species) from the weld environment. In certain embodiments, the tubular welding wire may further include alloying components to contribute species (e.g., copper, molybdenum, silicon, carbon, or other suitable alloying components) to the weld pool, affecting the mechanical properties (e.g., strength and toughness) of the weld. Furthermore, certain components of the tubular welding wire may also provide additional shielding atmosphere near the arc 34, affect the transfer properties of the arc 34, clean the surface of the workpiece 22, and so forth.

A cross-section of an embodiment of the presently disclosed welding wire is illustrated in FIG. 2. FIG. 2 illustrates a tubular welding wire 50 (e.g., welding electrode 50) having a metallic sheath 52 that encapsulates a granular or powdered core 54, which may also be referred to as filler. The metallic sheath 52 is manufactured from a low-carbon steel, or a low-alloy steel. In certain embodiments, the metal sheath 52 may provide 70% to 90% of the total weight of the tubular welding wire 50. The metallic sheath 52 may include additives or impurities (e.g., iron oxides, carbon, manganese, silicon, nickel, or similar compounds or elements) that may be selected to provide desired properties for the tubular welding wire 50 as well as the weld bead. For example, certain embodiments of the tubular welding wire 50 may include a metallic sheath 52 having less than 0.02% carbon by weight. In other embodiments, the metallic sheath 52 may include between 0.02% and 0.16% carbon by weight.

Furthermore, in certain embodiments, the metallic sheath 52 of the tubular welding wire 50 may include relatively low manganese content. In certain embodiments, the amount of manganese that may be present in the metallic sheath 52 may be between 0.01% and 0.5% by weight (e.g., 0.35% by weight or 0.26% by weight), while the granular core 54 may be completely free or substantially free from manganese (e.g., including little or no metallic manganese and/or including little or no manganese compounds). According to the invention, the granular core 54 includes less than 0.1% manganese by weight. As such, according to the invention, the tubular welding wire has a manganese content (e.g., manganese metal or alloys, or manganese compounds, or both) less than 0.5%. Further, in certain embodiments, the metallic sheath 52 may be completely free or substantially free (e.g., none or only trace impurity quantities) from manganese alloys, which may provide a tubular welding wire 50 that is completely free or substantially free of manganese metals and/or manganese compounds (e.g., manganese oxide).

The granular core 54 of the illustrated tubular welding wire 50 may generally be a compacted powder with a composition that, as discussed below, includes various components that each may serve at least one role as an alloying component, arc stabilizer, slag forming component, deoxidizer, and/or filler during the welding process. These components of the granular core 54 may be homogenously or non-homogenously (e.g., in clumps or clusters 56) disposed within the granular core 54. In certain embodiments, the granular core 54 may provide between approximately 10% and approximately 30% of the total weight of the tubular welding wire 50. Furthermore, as discussed in detail below, in certain embodiments, one or more components (e.g., certain arc stabilizing and/or slag forming components) are prepared and included in the granular core 54 as agglomerates (e.g., sintered and/or formed into frits). It should be noted that the term "agglomerate" or "frit," as used herein, refers to a mixture of compounds that have been fired or heated in a calciner or oven such that the components of the mixture are in intimate contact with one another. It should be appreciated that the agglomerate or frit may have subtly or substantially different chemical and/or physical properties than the individual components of the mixture used to form the agglomerate. For example, an agglomerate may generally be better suited for the weld environment (e.g., drier and/or better powder flow) than a non-agglomerated form of the same component.

Tables 1, 2, and 3 are set forth below for various embodiments of the tubular welding wire 50. More specifically, Table 1 includes a non-limiting list of twelve example formulations (e.g., E1-E14). Example formulations E4, E10 and E11 are examples for the granular core 54 for the presently disclosed tubular welding wire 50, whereas the other example formulations are comparative examples which do not form part of the present invention. Table 2 includes computed chemical composition for each of the example formulations (E1-E14) of the granular core 54 based on the components set forth in Table 1. Furthermore, Table 3 includes chemical and mechanical analysis results for weld deposits formed using certain welding wire embodiments set forth in Table 1. It may be appreciated that the welding wire examples E1-E14 may be classified according to (e.g., may at least partially comply with) one or more AWS standards (e.g., AWS A5.20, A5.29, or A5.36). It may be further appreciated that these AWS standards allow for certain variations in the composition, wherein welding wires that vary from the standard (e.g., by possessing a lower manganese content, as presently disclosed) may receive a G-type classification. For example, in certain examples, E1 may be classified under AWS A5.20 E71T-1C; E2 may be classified under AWS A5.20 E71T-1M; E3 and E9 may be classified under AWS A5.29 E71T1-Ni1C(G); E4 and E10 may be classified under AWS A5.29 E71T1-Ni1M(G); E5 may be classified under AWS A5.29 E81T1-NiC; E6 may be classified under AWS A5.29 E81T1-Ni1M; E7 may be classified under AWS A5.29 E81T1-K2C(G); E8 may be classified under AWS A5.29 E81T1-K2M(G); E11 and E12 may be classified under AWS A5.20 E71T-G H8; and E13 and E14 may be classified under AWS A5.29 E70T1-GM, AWS A5.36 E70T-M20A4-G-H8, AWS A5.36 E70T-M21A4-G-H8, AWS A5.29 E71T1-GM, AWS A5.36 E71T-M20A6-G-H8 or AWS A5.36 E71T-M21A6-G-H8. It may be appreciated that these classifications are merely provided as examples and are not intended to be limiting.

For the examples E1-E8 of Table 1, the metallic sheath 52 may account for 84% of the weight of the tubular welding wire 50, while the remaining 16% of the weight of the tubular welding wire may be contributed by the granular core 54. For examples E9-E12 and E14 of Table 1, the metallic sheath 52 may account for 85% of the weight of the tubular welding wire 50, while the remaining 15% may be contributed by the granular core 54. For example E13 of Table 1, the metallic sheath 52 may account for 75% of the weight of the tubular welding wire 50, while the remaining 25% may be contributed by the granular core 54. It may be appreciated that embodiments of the tubular welding wire 50 having a higher fill (e.g., granular core 54 contributing greater than 16% or between 16% and 35% of the weight of the tubular welding wire 50) may draw less current at a given wire feed speed and/or enable higher melt-off rates at a given current than welding wires with lower core loading (e.g., granular core 54 contributing less than 16%). As such, in certain embodiments, since welding fumes may be generated at a rate proportional to the applied electric power, the tubular welding wires 50 having higher core loading may enable both lower power consumption and fewer welding fumes (e.g., at equal melt rate) when compared to tubular welding wires 50 having lower core loading.

Further, for the examples E1-E14, the metallic sheath 52 may include between 0.3% and 0.4% (e.g., approximately 0.35%) manganese by weight. It should be appreciated that, while each component in Table 1 may be listed as serving a particular purpose (e.g., as an alloying agent, arc stabilizer, slag former, deoxidizer, or filler), each component may actually serve more than one role in the welding process. That is, for example, $TiO_2$ provided to the weld environment by the agglomerated titanium dioxide and/or the rutile powder may actually provide stability to the arc 34 in addition to aiding in slag formation. By further example, certain deoxidizing components (e.g., aluminum, magnesium, and/or zirconium) may bind strongly to oxygen, and sometimes nitrogen as well, from the welding atmosphere and form at least a portion of the slag around the weld bead. Similarly, certain deoxidizing components may also bind strongly to sulfur, which may come from the workpiece or from the welding consumable (e.g., as an impurity in the metallic sheath 52 or components of the granular core 54). As such, it should be appreciated that these components may be otherwise classified (e.g., as arc stabilizers, slag forming components, and/or deoxidizers) without altering the present invention.

Table 1. Example formulations for the granular core 54 for examples E1-E14 of tubular welding wire 50. Values are in weight percent relative to the total weight of the granular core 54. Further, the list is not exhaustive and, as such, the amounts of each ingredient may not sum up to unity.

| Role | Component | E1 | E2 | E3 | E4 | E5 | E6 | E7 | E8 | E9 | E10 | E11 | E12 | E13 | E14 |
|---|---|---|---|---|---|---|---|---|---|---|---|---|---|---|---|
| Alloying | Ferro-molybdenum metal powder | 0.0 | 0.0 | 0.0 | 0.0 | 1.5 | 0.0 | 0.0 | 0.0 | 0.0 | 0.0 | 0.0 | 0.0 | 0.0 | 0.0 |
| | Nickel powder | 2.5 | 2.5 | 5.2 | 6.2 | 5.5 | 5.5 | 11.5 | 10.5 | 6.8 | 6.3 | 9.0 | 9.0 | 6.4 | 9.3 |
| | Copper powder | 0.0 | 0.0 | 0.0 | 0.0 | 0.0 | 1.5 | 0.0 | 0.0 | 0.0 | 0.0 | 0.0 | 0.0 | 0.0 | 0.0 |
| | High carbon iron powder | 10.0 | 2.0 | 0.0 | 2.0 | 9.0 | 9.0 | 10.0 | 7.5 | 2.0 | 3.7 | 0.0 | 0.0 | 0.0 | 0.0 |
| Arc Stabilizing | Iron oxides | 0.0 | 3.5 | 0.0 | 7.0 | 0.0 | 3.5 | 0.0 | 3.5 | 0.0 | 7.5 | 7.5 | 4.1 | 3.1 | 2.5 |
| | Potassium fluorosilicate | 1.1 | 0.0 | 1.1 | 0.0 | 1.1 | 0.0 | 1.1 | 0.0 | 1.1 | 0.0 | 0.0 | 0.0 | 0.0 | 0.0 |
| | Sodium titanate frit | 9.0 | 11.0 | 9.0 | 11.0 | 9.0 | 11.0 | 9.0 | 11.0 | 9.6 | 11.7 | 0.0 | 0.0 | 0.0 | 0.0 |
| | Sodium titanate frit (pigment grade $TiO_2$) | 0.0 | 0.0 | 0.0 | 0.0 | 0.0 | 0.0 | 0.0 | 0.0 | 0.0 | 0.0 | 11.7 | 0.0 | 0.0 | 11.7 |
| | Lithium oxide agglomerate | 0.0 | 0.0 | 0.0 | 0.0 | 0.0 | 0.0 | 0.0 | 0.0 | 0.0 | 0.0 | 0.0 | 5.5 | 0.0 | 0.0 |
| Slag Forming | Rutile powder | 5.0 | 0.0 | 5.0 | 0.0 | 5.0 | 0.0 | 5.0 | 0.0 | 5.0 | 0.0 | 0.0 | 0.0 | 0.0 | 0.0 |
| | Manganous oxide powder | 0.0 | 4.0 | 0.0 | 0.0 | 0.0 | 5.0 | 0.0 | 4.0 | 0.0 | 0.0 | 0.0 | 0.0 | 0.0 | 0.0 |
| | Agglomerated titanium dioxide | 42.3 | 43.0 | 42.3 | 43.0 | 42.3 | 43.0 | 42.3 | 43.0 | 45.1 | 45.8 | 45.7 | 55.3 | 27.7 | 45.7 |
| | Manganous oxide frit | 0.0 | 0.0 | 0.0 | 0.0 | 0.0 | 0.0 | 0.0 | 0.0 | 0.0 | 0.0 | 0.0 | 0.0 | 2.7 | 2.5 |

(continued)

| Role | Component | E1 | E2 | E3 | E4 | E5 | E6 | E7 | E8 | E9 | E10 | E11 | E12 | E13 | E14 |
|---|---|---|---|---|---|---|---|---|---|---|---|---|---|---|---|
| Deoxidizing | Magnesium powder | 0.5 | 0.0 | 0.5 | 0.0 | 0.5 | 0.0 | 0.5 | 0.0 | 0.9 | 0.0 | 0.0 | 0.0 | 0.0 | 0.0 |
| | Aluminum-zirconium metal powder | 0.5 | 0.0 | 0.5 | 0.0 | 0.0 | 0.0 | 0.0 | 0.0 | 1.0 | 0.0 | 1.1 | 1.1 | 0.0 | 0.0 |
| | Ferro-zirconium-silicon powder | 8.7 | 4.5 | 8.7 | 4.5 | 9.3 | 4.5 | 9.3 | 4.5 | 8.3 | 5.3 | 3.1 | 3.1 | 4.7 | 5.9 |
| | Aluminum-magnesium metal powder | 3.8 | 4.3 | 3.8 | 4.3 | 3.7 | 4.3 | 3.7 | 4.3 | 3.3 | 4.3 | 3.7 | 3.7 | 0.0 | 1.0 |
| | Aluminum powder | 0.0 | 0.6 | 0.0 | 0.6 | 0.0 | 0.0 | 0.0 | 0.0 | 0.0 | 0.0 | 0.0 | 0.0 | 0.7 | 1.1 |
| | Ferro-silicon metal powder | 0.0 | 4.7 | 0.0 | 4.7 | 0.0 | 6.0 | 0.0 | 4.7 | 0.0 | 4.1 | 0.0 | 0.0 | 1.4 | 3.3 |
| | Calcium silicon powder | 0.0 | 0.0 | 0.0 | 0.0 | 0.0 | 0.0 | 0.0 | 0.0 | 0.0 | 0.0 | 3.5 | 3.5 | 0.0 | 1.0 |

**Table 2.** Computed chemical composition for each of the example formulations (E1-E14) of the granular core 54 based on the components set forth in Table 1. Values are in weight percent relative to the total weight of the granular core 54. Further, the list is not exhaustive and, as such, the amounts of each constituent may not sum up to unity.

| Chemical name | E1 | E2 | E3 | E4 | E5 | E6 | E7 | E8 | E9 | E10 | E11 | E12 | E13 | E14 |
|---|---|---|---|---|---|---|---|---|---|---|---|---|---|---|
| Aluminum (Al) | 2.13 | 2.77 | 2.13 | 2.76 | 1.85 | 2.18 | 1.85 | 2.17 | 2.11 | 2.16 | 2.42 | 2.42 | 0.70 | 1.62 |
| Carbon (C) | 0.43 | 0.11 | 0.06 | 0.11 | 0.39 | 0.36 | 0.43 | 0.31 | 0.13 | 0.17 | 0.06 | 0.06 | 0.07 | 0.05 |
| Copper (Cu) | 0.00 | 0.00 | 0.00 | 0.00 | 0.00 | 1.50 | 0.00 | 0.00 | 0.00 | 0.00 | 0.00 | 0.00 | 0.00 | 0.00 |
| Iron (Fe) | 27.04 | 24.91 | 24.76 | 21.46 | 23.22 | 19.14 | 18.14 | 17.29 | 19.63 | 17.46 | 15.20 | 15.20 | 53.55 | 18.03 |
| Magnesium (Mg) | 2.40 | 2.15 | 2.40 | 2.15 | 2.35 | 2.16 | 2.35 | 2.16 | 2.54 | 2.14 | 1.84 | 1.84 | 0.00 | 0.50 |
| Manganese (Mn) | 0.03 | 0.00 | 0.00 | 0.01 | 0.03 | 0.00 | 0.04 | 0.00 | 0.01 | 0.01 | 0.00 | 0.00 | 0.00 | 0.00 |
| Molybdenum (Mo) | 0.00 | 0.00 | 0.00 | 0.00 | 0.94 | 0.00 | 0.00 | 0.00 | 0.00 | 0.00 | 0.00 | 0.00 | 0.00 | 0.00 |
| Nickel (Ni) | 2.49 | 2.50 | 5.18 | 6.17 | 5.48 | 5.51 | 11.46 | 10.51 | 6.77 | 6.27 | 8.96 | 8.96 | 6.37 | 9.25 |
| Silicon (Si) | 4.46 | 4.60 | 4.44 | 4.58 | 4.76 | 5.26 | 4.76 | 4.61 | 4.23 | 4.70 | 3.65 | 3.65 | 3.07 | 5.19 |
| Zirconium (Zr) | 3.62 | 1.73 | 3.62 | 1.73 | 3.57 | 1.74 | 3.57 | 1.73 | 3.73 | 2.04 | 1.78 | 1.78 | 1.80 | 2.27 |
| Ferrous/ferric oxide ($Fe_xO_y$) | 0.00 | 3.52 | 0.00 | 7.00 | 0.00 | 3.52 | 0.00 | 3.52 | 0.00 | 7.50 | 7.50 | 7.49 | 3.15 | 2.54 |
| Manganous oxide (MnO) | 0.00 | 3.30 | 0.00 | 0.00 | 0.00 | 4.13 | 0.00 | 3.30 | 0.00 | 0.00 | 0.00 | 0.00 | 1.38 | 1.28 |
| Potassium oxide ($K_2O$) | 0.36 | 0.36 | 0.36 | 0.36 | 0.36 | 0.36 | 0.36 | 0.36 | 0.38 | 0.38 | 0.38 | 0.46 | 0.23 | 0.38 |
| Sodium oxide ($Na_2O$) | 1.55 | 1.81 | 1.55 | 1.79 | 1.55 | 1.81 | 1.55 | 1.80 | 1.65 | 1.91 | 1.91 | 0.65 | 0.32 | 1.91 |
| Silicon dioxide ($SiO_2$) | 2.80 | 3.07 | 2.80 | 2.95 | 2.80 | 3.11 | 2.80 | 3.07 | 2.98 | 3.14 | 3.13 | 4.06 | 2.72 | 4.26 |
| Titanium dioxide ($TiO_2$) | 50.81 | 48.32 | 50.81 | 48.11 | 50.81 | 48.38 | 50.81 | 48.35 | 53.78 | 51.20 | 51.11 | 50.16 | 25.13 | 51.11 |
| Lithium fluoride (LiF) | 0.81 | 0.82 | 0.81 | 0.82 | 0.81 | 0.82 | 0.81 | 0.82 | 0.86 | 0.87 | 0.87 | 1.05 | 0.53 | 0.87 |

(continued)

| Chemical name | E1 | E2 | E3 | E4 | E5 | E6 | E7 | E8 | E9 | E10 | E11 | E12 | E13 | E14 |
|---|---|---|---|---|---|---|---|---|---|---|---|---|---|---|
| Potassium fluorosilicate ($K_2SiF_6$) | 1.10 | 0.00 | 1.10 | 0.00 | 1.10 | 0.00 | 1.10 | 0.00 | 1.10 | 0.00 | 0.00 | 0.00 | 0.00 | 0.00 |
| Calcium | 0.00 | 0.00 | 0.00 | 0.00 | 0.00 | 0.00 | 0.00 | 0.00 | 0.00 | 0.00 | 1.01 | 1.01 | 0.00 | 0.29 |
| Lithium oxide | 0.00 | 0.00 | 0.00 | 0.00 | 0.00 | 0.00 | 0.00 | 0.00 | 0.00 | 0.00 | 0.00 | 1.03 | 0.00 | 0.00 |

As set forth in Table 1, according to the invention, the granular core 54 of the tubular welding wire 50 includes between 4% and 18% alloying components by weight. For example, certain embodiments of the tubular welding wire 50 may include a granular core 54 having ferro-molybdenum metal powder, nickel powder, copper powder, and/or high-carbon (e.g., between 3.2% and 3.9% carbon by weight) iron powder. As set forth in Table 2, according to the invention, the tubular welding wire 50 includes a granular core 54 having between 0% and 1.5% copper, between 2% and 12% nickel, between 0% and 1% molybdenum, and between 0% and approximately 1% carbon by weight. While these alloying components may otherwise contribute to the welding process (e.g., as arc stabilizers, slag formers, and/or deoxidizers), generally speaking, these alloying components are substantially incorporated (e.g., greater than 90% incorporated) into the weld metal to affect the properties (e.g., strength, ductility, corrosion resistance, and so forth) of the weld bead and the surrounding workpiece 22.

Furthermore, as set forth in Table 1, according to the invention, the granular core 54 of the tubular welding wire 50 includes between 10% and 15% arc stabilizing components by weight. For example, certain embodiments of the tubular welding wire 50 may include a granular core 54 having iron oxides, potassium fluorosilicate, sodium titanate frit (e.g., made using either rutile or pigment-grade $TiO_2$), and/or lithium oxide agglomerate. As set forth in Table 2, according to the invention, the tubular welding wire 50 includes a granular core 54 having between 0% and 7.5% iron oxides, between 0% and 2% potassium fluorosilicate, between 0% and 12% sodium titanate frit, and between 0% and 6% lithium oxide agglomerate by weight. Again, while these components may otherwise contribute to the welding process (e.g., as slag formers and/or deoxidizers), these arc stabilizers may generally provide species to the arc that readily ionize, enabling a more consistent and/or controllable arc 34 to the surface of the workpiece 22. The presently disclosed sodium titanate frit may be a sintered mixture of sodium titanate and lithium fluoride and/or sodium silicate that may be better suited for the weld environment (e.g., drier and/or better powder flow) than non-agglomerated sodium titanate. As indicated in Table 1, in certain examples the sodium titanate may be made from rutile and, accordingly, may have one or more of the aforementioned impurities that rutile may commonly include. In other embodiments indicated in Table 1, the sodium titanate may instead be made from pigment grade $TiO_2$, which may lack one or more of these impurities. By specific example, an embodiment of a pigment-grade sodium titanate frit may include 11.8% sodium oxide, approximately 5.7% silica, and 82.5% pigment-grade $TiO_2$. Similarly, as indicated in Table 1, certain examples may include a lithium agglomerate that may be a sintered mixture of lithium oxide, iron oxides, sodium oxide, and silica, which may be better suited for the weld environment (e.g., drier and/or better powder flow) than a non-agglomerated mixture of these components. By specific example, in certain embodiments, the lithium agglomerate may include 18.7% lithium oxide, 61.6% iron oxides, 0.2% sodium oxide, and 19.5% silica.

Additionally, as set forth in Table 1, according to the invention, the granular core 54 of the tubular welding wire 50 includes between 25% and 50% slag forming components by weight. Certain examples of the tubular welding wire 50 may include a granular core 54 having rutile powder, manganous oxide powder, manganous oxide frit, and/or agglomerated titanium dioxide. For example, certain examples of the presently disclosed welding wire 50 may have a granular core 54 that includes between 1% and 10% or between 3% and 5% manganese oxide powder by weight. Other examples of the presently disclosed welding wire 50 may have a granular core 54 that includes substantially no (e.g., 0%) manganese oxide powder by weight. Accordingly, as set forth in Table 2, in certain examples, this may result in granular cores 54 and/or tubular welding wires 50 having a manganese content (e.g., as a metal and/or as a component of a chemical compound) less than approximately 3.5%, 3%, 2.5%, 2%, 1%, 0.5%, 0.35%, 0.05%, 0.03%, 0.01%, or even 0.001% by weight.

Further, in certain examples, the slag forming components of the tubular welding wire 50 may include a frit or agglomerate that includes manganous oxide (e.g., $Mn_xO_y$). For example, in certain examples, the granular core 54 may include a frit that is formed by sintering a mixture that includes water (e.g., between 15% and 17% by weight, or 16% by weight), liquid sodium silicate (e.g., between 1% and 5% by weight, or 2% by weight), silica (e.g., flour-like consistency, between 33% and 37% by weight, or 35% by weight), and manganous oxide (e.g., between 44% and 50% by weight, or 47% by weight). In certain embodiments, these components may be mixed together before being heated in an oven or kiln to form the manganous oxide frit. For example, after formation the manganous oxide frit may include silicon dioxide (e.g., between 42% and 48% by weight, or 45% by weight) and manganous oxide (e.g., between 48% and 54% by weight, or 51% by weight manganese dioxide). Further, the manganous oxide frit may, in certain embodiments, include sodium oxide (e.g., less than 1% or 0.2% by weight), aluminum oxide (e.g., less than 2% or 1.7% by weight), and iron oxide (e.g., less than 2% or 1.7% by weight). In certain examples, the manganous oxide frit may account for between 0% and 5% or between 2% and 3% of the weight of the granular core 54.

In terms of other slag forming components, in certain examples, the granular core 54 of the tubular welding wire 50 may include between 45% and 55% titanium dioxide by weight (e.g., from the rutile and/or agglomerated titanium dioxide sources). Accordingly, in certain examples, the tubular welding wire 50 may include between approximately 6% and approximately 8% pigment-grade $TiO_2$ by weight. It should be appreciated that, the $TiO_2$ used to form the presently disclosed agglomerated titanium dioxide is a pigment-grade $TiO_2$ (e.g., greater than 95%, 99%, 99.9%, or 99.99% $TiO_2$) that may lack or have lower levels of one or more impurities typically found in rutile (e.g., iron, niobium, tantalum, vanadium, and/or other impurities). That is, pigment grade $TiO_2$ is generally both purified and milled, in contrast to lower purity $TiO_2$, such as milled rutile. According to the invention the tubular welding wire contains 25 - 50 % slag forming components by weight consisting of agglomerated $TiO_2$.

Furthermore, in certain examples, this pigment grade $TiO_2$ may be sintered with one or more drying and/or binding agents (e.g., lithium fluoride, and/or sodium silicate) to form the agglomerated titanium dioxide component of the granular core 54. For example, in certain examples of the presently disclosed welding wire 50, an agglomerated titanium dioxide component may be formed by dry mixing purified $TiO_2$ powder and purified (e.g., precipitated grade) lithium fluoride for a period of time (e.g., 10 min). Then, as mixing continues, a concentrated aqueous solution of sodium silicate and a concentrated aqueous solution of potassium silicate may be slowly added to the dry mixture along with, in certain situations, a small quantity of water until a desired consistency is achieved (e.g., mixture begins to "ball"). After mixing for an additional period of time (e.g., 3 to 5 minutes), in certain embodiments, the wet mixture may be disposed in an oven (e.g., a direct fired kiln) and heated to a range of 1200 °F (appr. 650°C) to 1600 °F (appr. 870°C) for 15 to 25 minutes (or heated to similar temperatures in a pan for approximately 2 hours). In certain examples, the $TiO_2$ agglomerate may be made from 81.3% purified $TiO_2$, 11% sodium silicate, 6% potassium silicate, and approximately 1.7% lithium fluoride. Once the agglomerate has been formed (e.g., after firing), in certain embodiments, the agglomerate may consist of pigment-grade $TiO_2$, silica, potassium oxide, sodium oxide and lithium fluoride (e.g., 90.7% $TiO_2$, 5.4% silica, 1.2% sodium oxide, 0.8% potassium oxide, and 1.9% lithium fluoride). While not desiring to be bound by theory, it is believed that using a combination of both sodium and potassium silicates, as presently disclosed, provides a $TiO_2$ agglomerate that may be especially resistant to accumulating moisture from the surrounding environment. Additionally, in certain embodiments, using lithium fluoride in combination with these two silicates increases the moisture resistance of the $TiO_2$ agglomerate and enables the formation of a harder and/or denser $TiO_2$ agglomerate.

Additionally, as set forth in Table 1, according to the invention, the granular core 54 of the tubular welding wire 50 includes between 5% and 15% deoxidizers by weight. For example, certain embodiments of the tubular welding wire 50 may include a granular core 54 having magnesium powder, aluminum-zirconium metal powder, ferro-zirconium-silicon powder, aluminum-magnesium metal powder, aluminum powder, ferro-silicon metal powder, and/or calcium silicon powder. By specific example, certain embodiments of tubular welding wire 50 may have a granular core 54 that includes aluminum-zirconium metal powder and/or ferro-zirconium-silicon powder as deoxidizing components. In certain examples, the calcium silicon powder may include 30% calcium, 60% silicon, 6% iron, and 1% carbon by weight of the powder. According to the invention, as set forth in Table 2, the granular core 54 of the tubular welding wire 50 includes between 0% and 3% aluminum, between 0% and 3% magnesium, between 0% and 4% zirconium, and between 0% and 6% silicon by weight. While these components may otherwise contribute to the welding process (e.g., as arc stabilizers or slag formers), these deoxidizing components are generally selected to strongly bind oxygen in order to block (e.g., limit or prevent) this oxygen from remaining in the weld pool and weakening the weld deposit.

Furthermore, as set forth in Table 1, in certain examples, the granular core 54 of the tubular welding wire 50 may include between 5% and 60% filler metal by weight. For example, certain embodiments of the tubular welding wire 50 may include a granular core 54 having iron powder as the filler metal. As set forth in Table 2, according to the invention, the tubular welding wire 50 may have a granular core 54 including between 5% and 55% or between 15% and 30% iron by weight. While the iron powder may otherwise contribute to the welding process (e.g., as an arc stabilizer, slag former, and/or deoxidizer), the iron powder may generally provide a substantial portion of the metal used to form the weld on the workpiece 22. As such, most of the iron powder included in the granular core 54 may be incorporated into and form the weld deposit.

Table 3 includes chemical and mechanical analysis results for weld deposits formed using the certain welding wire examples (e.g., examples E1-E12) set forth in Tables 1 and 2. It should be noted that the elements included in Table 3 include values in the form of weight percentages for a non-exhaustive list of elements; other elements (e.g., Fe) and other trace impurities (e.g., arsenic (As)) may also be present within the weld metal. In general, it should be noted that all of the tubular welding wire embodiments provide weld deposits having relatively low oxygen content (e.g., between 0% and 0.15%, between 0.05% and 0.10%, or less than 0.09% by weight) and relatively low nitrogen content (e.g., between 0% and 0.01%, between 0.004% and 0.009%, or less than 0.01% by weight). Additionally, in certain embodiments of the tubular welding wire 50, the use of the pigment grade $TiO_2$ in the agglomerated titanium dioxide generally enables the formation of weld deposits having relatively low vanadium content (e.g., between 0.006% and 0.008% or less than 0.009% by weight) and relatively low niobium content (e.g., between 0.003% and 0.005% or less than 0.006% by weight), which may offer advantages to the weld deposit. Additionally, certain embodiments of the tubular welding wire 50 may form weld deposits having between 0.01% and 5%, between 0.1% and 3%, between 1.75% and 2.75%, or between 0.5% and 2% nickel by weight. Furthermore, certain embodiments of the tubular welding wire 50 may form weld deposits having a manganese content between 0.01% and 2.5%, between 0.1% and 2%, between 0.5% and 1%, or less than 0.4% by weight. Further, the presently disclosed tubular welding wires 50 enable the formation of weld deposits having substantially lower manganese content (e.g., less than 2.5% manganese by weight) than weld deposits from other welding wires, while still maintaining good weld properties.

Table 3 also lists mechanical properties for each of the example weld deposits formed using the certain welding wire examples (e.g., examples E1-E12) listed in Table 1. Specifically, Table 3 includes mechanical property measurements for yield strength, tensile strength, percent elongation, and Charpy-V-Notch (CVN) values at -20 °F (appr. -29°C) and -40 °F (-40°C) as determined based on AWS A5.20 (e.g., E71T1-GM), A5.36, or another suitable standard. In general, the example weld deposits in Table 3 demonstrate yield strengths from 60 ksi (appr. 414 MPa) to 75 ksi (appr. 517 MPa) tensile strengths from 70 ksi (appr. 483MPa) to 85 ksi (appr. 586 MPa), percent elongation from 20% to 35%, CVN from 20 ft-lbs (appr. 27 J) to 105 ft-lbs (appr. 142 J) at -20 °F (appr. -29°C), and CVN from 35 ft-lbs (appr. 48 J) to 95 ft-lbs (appr. 129 J) at -40 °F (-40°C). For example, in certain embodiments, the weld deposit demonstrated a CVN of greater than 20 ft-lbs (appr. 27 J), greater than 30 ft-lbs (appr. 41 J), greater than 40 ft-lbs (appr. 54 J), greater than 50 ft-lbs (appr. 68 J), greater than 65 ft-lbs (appr. 88 J), greater than 70 ft-lbs (appr. 95 J) greater than 75 ft-lbs, greater than 80 ft-lbs, greater than 85 ft-lbs, greater than 90 ft-lbs (appr. 122 J), or greater than 100 ft-lbs (appr. 136 J) at -20 °F (appr. -29°C). By further example, in certain embodiments, the weld deposit demonstrated a CVN of greater than 40 ft-lbs (appr. 54 J), greater than 45 ft-lbs (appr. 61 J), greater than 50 ft-lbs (appr. 68 J), greater than 70 ft-lbs (appr. 95 J), greater than 75 ft-lbs (appr. 102 J), greater than 80 ft-lbs (appr. 109 J), greater than 85 ft-lbs (appr. 115 J), or greater than 90 ft-lbs (appr. 122 J) at -40 °F (-40°C). Further, for embodiment E11 and example E12, the CVN at-60 °F (appr. -51°C) is 100 ft-lb; (appr. 136 J) as listed in Table 3. It should be noted that despite the relatively low manganese content determined for the weld deposits EI-EI2 (e.g., less than 2.5% manganese by weight of the weld deposit), the weld deposits possess relatively high toughness and a suitable tensile strength for the classification type, as compared to conventional welding wires.

**Table 3.** Example all-weld-metal analyses and mechanical test results for weld deposits E1-E12 formed using the corresponding tubular welding wire examples

| Element | E1 | E2 | E3 | E4 | E5 | E6 | E7 | E8 | E9 | E10 | E11/12 |
|---|---|---|---|---|---|---|---|---|---|---|---|
| Carbon (C) | 0.067 | 0.032 | 0.020 | 0.028 | 0.075 | 0.077 | 0.071 | 0.058 | 0.035 | 0.080 | 0.027 |
| Manganese (Mn) | 0.205 | 0.388 | 0.206 | 0.206 | 0.222 | 0.429 | 0.229 | 0.392 | 0.251 | 0.217 | 0.245 |
| Phosphorus (P) | 0.008 | 0.010 | 0.008 | 0.006 | 0.011 | 0.010 | 0.009 | 0.013 | 0.009 | 0.012 | 0.011 |
| Sulfur (S) | 0.008 | 0.008 | 0.008 | 0.008 | 0.010 | 0.010 | 0.008 | 0.011 | 0.008 | 0.013 | 0.008 |
| Silicon (Si) | 0.366 | 0.496 | 0.427 | 0.486 | 0.524 | 0.607 | 0.451 | 0.485 | 0.488 | 0.478 | 0.385 |
| Copper (Cu) | 0.045 | 0.047 | 0.047 | 0.045 | 0.050 | 0.282 | 0.042 | 0.048 | 0.018 | 0.014 | 0.016 |
| Chromium (Cr) | 0.047 | 0.034 | 0.048 | 0.033 | 0.058 | 0.033 | 0.077 | 0.047 | 0.026 | 0.034 | 0.019 |
| Vanadium (V) | 0.007 | 0.007 | 0.008 | 0.006 | 0.008 | 0.007 | 0.008 | 0.006 | 0.007 | 0.008 | 0.003 |
| Nickel (Ni) | 0.448 | 0.467 | 0.927 | 1.096 | 1.057 | 0.978 | 2.084 | 2.044 | 1.070 | 1.028 | 1.410 |
| Molybdenum (Mo) | 0.007 | 0.009 | 0.007 | 0.006 | 0.171 | 0.006 | 0.008 | 0.007 | 0.005 | 0.006 | 0.002 |
| Aluminum (Al) | 0.013 | 0.022 | 0.015 | 0.034 | 0.012 | 0.017 | 0.016 | 0.014 | 0.016 | 0.014 | 0.021 |
| Titanium (Ti) | 0.061 | 0.053 | 0.062 | 0.059 | 0.061 | 0.064 | 0.069 | 0.054 | 0.085 | 0.050 | 0.060 |
| Niobium (Nb) | 0.003 | 0.004 | 0.005 | 0.003 | 0.005 | 0.005 | 0.005 | 0.005 | 0.006 | 0.005 | 0.003 |
| Cobalt (Co) | 0.002 | 0.004 | 0.003 | 0.002 | 0.004 | 0.004 | 0.004 | 0.008 | 0.003 | 0.004 | 0.003 |
| Tungsten (W) | 0.005 | 0.005 | 0.005 | 0.005 | 0.005 | 0.005 | 0.005 | 0.012 | 0.005 | 0.008 | 0.005 |
| Tin (Sn) | 0.005 | 0.004 | 0.004 | 0.002 | 0.003 | 0.001 | 0.005 | 0.003 | 0.002 | 0.001 | 0.005 |
| Zirconium (Zr) | 0.008 | 0.005 | 0.009 | 0.007 | 0.008 | 0.004 | 0.009 | 0.004 | 0.011 | 0.008 | 0.010 |
| Antimony (Sb) | 0.000 | 0.001 | 0.000 | 0.000 | 0.003 | 0.001 | 0.000 | 0.005 | 0.000 | 0.001 | 0.000 |
| Oxygen (O) | 0.077 | 0.075 | 0.073 | 0.080 | N/A | N/A | 0.067 | 0.065 | 0.070 | 0.078 | 0.079 |
| Nitrogen (N) | 0.005 | 0.004 | 0.004 | 0.009 | N/A | N/A | 0.004 | 0.004 | 0.005 | 0.004 | 0.005 |
| **Property** | | | | | | | | | | | |
| Yield Strength (KSI) | 64.2 | 61.2 | 62.9 | 65.1 | 70.8 | 71.5 | 71.6 | 70.1 | 66.9 | 63.2 | 63.8 |
| Tensile Strength (KSI) | 74.1 | 71.4 | 70.9 | 72.8 | 83.4 | 82.2 | 83.6 | 81.9 | 74.8 | 72.8 | 72.1 |
| % Elongation | 27.2 | 30.5 | 29.2 | 28 | 26.8 | 25.8 | 23.1 | 26.8 | 28.2 | 28.7 | 30.2 |
| CVN (ft-lbs) @ -20 °F | 85 | 87 | 101 | 70 | 41 | 66 | 77 | 76 | 96 | 85 | 101 |

(continued)

| Property | | | | | | | | | | | |
|---|---|---|---|---|---|---|---|---|---|---|---|
| CVN (ft-lbs) @ -40 °F | 52 | 45 | 93 | 75 | 49 | 51 | 69 | 65 | 63 | 45 | N/A |
| CVN (ft-lbs) @ -60 °F | N/A | N/A | N/A | N/A | N/A | N/A | N/A | N/A | N/A | N/A | 100 |

E1-E12 of Table 1. Elemental values are in weight percent relative to the total weight of the weld deposit. Weld deposits were formed using the following parameters: Amps: 260; Volts: 26-28; DCEP; Wire Feed Speed: 450 inches per minute; Electrical Stickout: 0.75 in.; Travel Speed: 10 inches per minute; Angle: 45°; Position: 1g; Shielding Gas: 100% $CO_2$, 75% Argon and 25% $CO_2$, or 90% Argon and 10% $CO_2$. N/A denotes measurements that are not presently available.

It may be appreciated that, in certain embodiments, the formulation of the tubular welding wire 50 may be designed to provide a tubular welding wire 50 having an equivalent carbon content within a particular range. For example, in certain embodiments, the tubular welding wire 50 may have a particular carbon equivalent (CE) determined according to the Ito and Bessyo method (also known as the critical metal parameter, Pcm) based on the following formula:

$$\textbf{Eq. 1} \quad CE = \%C + \%Si/30 + (\%Mn + \%Cu + \%Cr)/20 + \%Ni/60 + \%Mo/15 + \%V/10 + 5*\%B$$

, wherein each of the elemental percentages are provided in weight percent relative to the total weight of the tubular welding electrode 50. For example, in certain examples, the tubular welding wire 50 may have a manganese content less than or equal to 3.5% by weight, a carbon content less than or equal to 0.18% by weight, and a CE (determined according to equation 1) that is substantially less than 1.8. In certain embodiments, the tubular welding wire 50 may have a CE (determined according to equation 1) between 0.05 and 0.5, between 0.06 and 0.4, between 0.08 and 0.25, or between 0.08 and 0.3. In certain embodiments, the tubular welding wire 50 may have a CE (determined according to equation 1) selected based on a desired tensile strength. For example, a tubular welding wire 50 may have a CE of 0.08 (e.g., between 0.06 and 0.1) to provide an estimated tensile strength of 70 ksi (appr. 483 MPa), 0.13 (e.g., between 0.11 and 0.15) to provide an estimated tensile strength of 80 ksi (appr. 552 MPa), 0.2 (e.g., between 0.18 and 0.22) to provide an estimated tensile strength of 100 ksi (appr. 690 MPa), 0.25 (e.g., between 0.23 and 0.27) to provide an estimated tensile strength of 125 ksi (appr. 862 MPa), 0.3 (e.g., between 0.28 and 0.32) to provide an estimated tensile strength of 140 ksi (appr. 965 MPa).

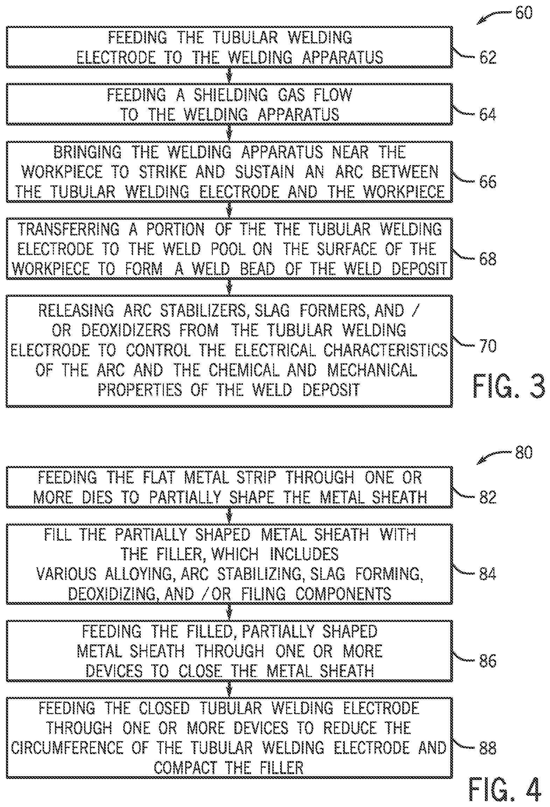

FIG. 3 illustrates an embodiment of a process 60 by which a workpiece 22 may be welded using the disclosed welding system 10 and tubular welding wire 50. The illustrated process 60 begins with feeding (block 62) the tubular welding electrode 50 (i.e., the tubular welding wire 50) to a welding apparatus (e.g., welding torch 18). Additionally, the process 60 includes providing (block 64) a shielding gas flow (e.g., 100% argon, 100% $CO_2$, 75% argon / 25% $CO_2$, 90% argon / 10% $CO_2$, or similar shielding gas flow) near the contact tip of the welding apparatus (e.g., the contact tip of the torch 18). In other embodiments, welding systems may be used that do not use a gas supply system (e.g., such as the gas supply system 16 illustrated in FIG. 1) and one or more components (e.g., potassium carbonate) of the tubular welding electrode 50 may decompose to provide a shielding gas component (e.g., carbon dioxide).

Continuing through the process 60, next, the tubular welding electrode 50 may be brought near (block 66) the workpiece 22 to strike and sustain an arc 34 between the tubular welding wire 50 and the workpiece 22. It should be appreciated that the arc 34 may be produced using, for example, a DCEP, DCEN, DC variable polarity, pulsed DC, balanced or unbalanced AC power configuration for the GMAW system 10. Once the arc 34 has been established to the workpiece 22, a portion of the tubular welding electrode 50 (e.g., filler metals and alloying components) may be transferred (block 68) into the weld pool on the surface of the workpiece 22 to form a weld bead of a weld deposit. Meanwhile, the remainder of the components of the tubular welding electrode 50 may be released (block 70) from the tubular welding electrode 50 to serve as arc stabilizers, slag formers, and/or deoxidizers to control the electrical characteristics of the arc and the resulting chemical and mechanical properties of the weld deposit.

By specific example, in certain examples, the tubular welding wire 50 (e.g., embodiments E13 and/or E14) may be utilized according to the welding process 60 and the welding parameters described below with respect to Table 4 to form a weld deposit. In certain examples, (e.g., embodiments E13 and/or E14) the tubular welding wire 50 may provide a weld deposit having less than or equal to 0.4% manganese by weight and between 1.4% and 1.8% nickel by weight of the weld deposit. Additionally, in certain examples, the weld deposit may also include between 0.3% and 0.6% silicon, less than 0.5% chromium, less than 0.5% molybdenum, and less than 0.2% vanadium by weight. In certain embodiments, the weld deposit may also include less than or equal to 0.05% carbon, less than 0.02% phosphorus, and less than 0.02% sulfur by weight.

Certain examples of the tubular welding wire 50 (e.g., E13 and E14) may enable the formation of a weld deposit having a yield strength, tensile strength, toughness, and so forth, as set forth in Table 5 below. For example, in certain embodiments, the tubular welding wire 50 may enable the formation of a weld deposit having a yield strength between 60 ksi (appr. 414 MPa) and 70 ksi (appr. 483 MPa), a tensile strength between 70 ksi (appr. 483 MPa) and 80 ksi (appr. 552 MPa), and an elongation between 20% and 40% (e.g., greater than 22% or greater than 30%) after deposition. Additionally, in certain embodiments, the tubular welding wire 50 may enable the formation of a weld deposit having a yield strength between approximately 50 ksi (appr. 345 MPa) and 60 ksi (appr. 414 MPa), a tensile strength between 60 ksi (appr. 414 MPa) and 70 ksi (appr. 483 MPa), and an elongation between 25% and 35% after heat treatment. In general, the tubular welding wire 50 may enable the formation of a weld deposit having CVN values greater than approximately 20 ft-lbs (appr. 27 J) at both -20 °F (appr. -29°C) and -60 °F (appr. -51°C) after deposition. For example, in certain embodiments, the tubular welding wire 50 may enable the formation of a weld deposit having a CVN value between 50 ft-lbs (appr. 68 J) and 80 ft-lbs (appr. 109 J) at -20 °F (appr. -29°C) and between approximately 60 ft-lbs (appr. 81 J) and approximately 85 ft-lbs (appr. 115 J) at -60 °F (appr. -51°C) after deposition. In certain embodiments, the tubular welding wire 50 may enable the formation of a weld deposit having a CVN value between 90 ft-lbs (appr. 122 J) and 100 ft-lbs (appr. 136 J) at -20 °F (appr. -29°C) and between 80 ft-lbs (appr. 109 J) and 90 ft-lbs (appr. 122 J) at -60 °F (appr. -51°C) after heat treatment.

Certain examples of the tubular welding wire 50 (e.g., E13 and E14) may provide fume generation rates similar to those set forth in Table 6 below. For example, in certain embodiments, the tubular welding wire 50 may enable less than 1%, less than 0.5%, less than 0.4%, less than 0.35%, or less than 0.32% of the tubular welding wire 50 to be converted to fumes during the welding operation. Additionally, as set forth in Table 6, in certain embodiments, the tubular welding wire 50 may enable a fume generation rate less than approximately 0.4 g/min, between 0.25 g/min and 0.4 g/min with melt rates of 122 g/min or less. Further, as illustrated in Table 6, in certain embodiments, the tubular welding wire 50 may enable a welding fume having less than 7%, less than 5%, less than 4%, or 0.35% manganese by weight, meaning that less than 1%, less than 0.1%, less than 0.05%, or 0.01% of the tubular welding wire 50 may be converted to manganese welding fumes.

Table 4. Example welding procedures for use with embodiments of the disclosed tubular welding wire 50, a 90% Ar / 10% $CO_2$ shielding gas mixture, and DCEP current.

| Diameter; Tip-To-Plate Distance; Position | Arc Voltage | Current | Wire Feed Speed | Deposition Rate | Efficiency |
|---|---|---|---|---|---|
| .045" (1.2 mm) | 26 V | 210 A | 300 in/min (760 cm/min) | 6.51 lbs/hr (2.95 kg/hr) | 90.6% |
| 3/4" (19 mm) | 28 V | 250 A | 450 in/min (1100 cm/min) | 10.78 lbs/hr (4.44 kg/hr) | 90.7% |
| Flat, Horiz., Vertical and Overhead | 30 V | 325 A | 600 in/min (1500 cm/min) | 13.12 lbs/hr (5.95 kg/hr) | 91.3% |
| 0.093" (2.36 mm) | 26 V | 400 A | 160 in/min (405 cm/min) | 12.73 lbs/hr (5.77 kg/hr) | 86.4% |
| 1" (25 mm) | 28 V | 475 A | 210 in/min (535 cm/min) | 16.81 lbs/hr (7.62 kg/hr) | 86.9% |
| Flat and Horizontal | 30 V | 590 A | 280 in/min (710 cm/min) | 23.30 lbs/hr (10.57 kq/hr) | 90.4% |

Table 5. Examples of physical properties of weld deposits formed using the disclosed tubular welding wire 50. Electrode diameter is provided in inches, yield strength (YS) and tensile strength (TS) are provided in units ksi. Elongation and area reduction are provided as percentages, test temperature is provided in degrees Fahrenheit, and CVN toughness values are provided in ft-lbs. Rows 1-6 are as-welded deposits, while the final two rows represent weld deposits after heat treatment (e.g., 2 hrs at 1150°F).

| AWS Test | Diameter | Shielding Gas | Yield Strength | Tensile Strength | Elongation | Area Reduction | Test Temp. | CVN |
|---|---|---|---|---|---|---|---|---|
| PB9804 | 0.093 in | 90% Ar / 10% $CO_2$ | 60.7 ksi | 72.8 ksi | 27.40% | 65.7% | -20 °F | 57 ft-lbs |
| PB9874 | 0.093 in | 75% Ar / 25% $CO_2$ | 62.0 ksi | 73.6 ksi | 28.00% | 61.7% | -20 °F | 70 ft-lbs |
| PB9945 | 0.093 in | 95% Ar / 5% $CO_2$ | 64.6 ksi | 77.2 ksi | 26.50% | 63.0% | -20 °F | 73 ft-lbs |

(continued)

| AWS Test | Diameter | Shielding Gas | Yield Strength | Tensile Strength | Elongation | Area Reduction | Test Temp. | CVN |
|---|---|---|---|---|---|---|---|---|
| PB9381 | 0.045 in | 90% Ar / 10% $CO_2$ | 63.5 ksi | 73.5 ksi | 28.80% | 62.1% | -60 °F | 61 ft-lbs |
| PB9911 | 0.045 in | 75% Ar / 25% $CO_2$ | 66.2 ksi | 73.8 ksi | 29.60% | 64.9% | -60 °F | 81 ft-lbs |
| PB9912 | 0.045 in | 95% Ar / 5% $CO_2$ | 62.3 ksi | 71.1 ksi | 28.70% | 67.1% | -20 °F | 77 ft-lbs |
| Stress Relieved 2 hours at 1150°F using Ar-$CO_2$ gas shielding (40 cfh) | | | | | | | | |
| PC0459 | 0.093 in | 90% Ar / 10% $CO_2$ | 52.8 ksi | 67.8 ksi | 29.20% | 71.5% | -20 °F | 92 ft-lbs |
| PC0765 | 0.045 in | 90% Ar / 10% $CO_2$ | 55.6 ksi | 69.4 ksi | 31.10% | 74.3% | -60 °F | 87 ft-lbs |

Table 6. Fume generation testing according to AWS F1.2 for embodiments of the disclosed tubular welding wire 50.

| AWS Test | Diameter | Shielding Gas | Melt-off Rate | Fume Rate | Electrode Converted to Fume | Approx. Mn in Fume | Approx. Mn Fume Rate | Approx. Electrode Converted to Mn Fume | Approx. Mn Emission per lb electrode consumed |
|---|---|---|---|---|---|---|---|---|---|
| FA1697 | 0.093 in | 90% Ar / 10% $CO_2$ | 107.9 g/min (14.3 lbs/hr) | 0.275 g/min (0.036 lbs/hr) | 0.26% | 3.5 wt% | 0.010 g/min (0.0013 lbs/hr) | 0.01% | 0.0001 lbs |
| FA1700 | 0.093 in | 90% Ar / 10% $CO_2$ | 121.8 g/min (16.1 lbs/hr) | 0.395 g/min (0.052 lbs/hr) | 0.32% | 3.5 wt% | 0.014 g/min (0.0019 lbs/hr) | 0.01% | 0.0001 lbs |
| FA1717 | 0.045 in | 90% Ar / 10% $CO_2$ | 81.5 g/min (10.78 lbs/hr) | 0.263 g/min (0.035 lbs/hr) | 0.32% | 3.5 wt% | 0.009 g/min (0.0012 lbs/hr) | 0.01% | 0.0001 lbs |

As set forth above, the presently disclosed welding system 10 may provide low fume generation rates (FGR) and/or low manganese fume generation rates (MnFGR). That is, the presently disclosed tubular welding wire 50 (e.g., working in combination with particular shielding gases) may provide low FGRs and/or low MnFGRs. Table 7 includes FGR and MnFGR data for a number of standard welding electrodes alongside FGR and MnFGR data for certain disclosed welding electrode embodiments. Accordingly, as illustrated in Table 7, certain disclosed welding wire embodiments may afford a FGR of less than 0.8 grams per min (g/min), less than 0.7 g/min, less than 0.6 g/min, less than 0.5 g/min, less than 0.4 g/min, less than 0.35 g/min, or less than 0.34 g/min. Furthermore, as illustrated in Table 7, certain disclosed welding wire embodiments may afford a MnFGR of less than 0.06 g/min, less than 0.05 g/min, less than 0.04 g/min, less than 0.03 g/min, less than 0.02 g/min, less than 0.01 g/min, less than 0.009 g/min, less than 0.008 g/min, or less than 0.007 g/min.

For further comparison, AWS F3.2 Annex B indicates that a typical FGR produced by an E71T-1 FCAW electrode is 0.7 g/min to 0.8 g/min; while the FGRs of certain presently disclosed welding wire embodiments listed in Table 7 are between 0.3 g/min and 0.6 g/min, especially for certain shielding gases (e.g., argon/$CO_2$ mixtures). Additionally, AWS F3.2 Annex C indicates that the typical manganese contribution to the total fumes produced by an E70T-1 FCAW electrode is between 6.2% and 13.5%, and AWS F3.2 Annex D indicates that E70T-1 and E71T-1 FCAW electrodes typically produce total fumes having 8.1% or 9.0% manganese. In contrast, the MnFGRs presented in Table 7 represent 1.1% to 3.3% manganese contribution to the total fume, significantly lower than other welding electrodes. As such, the presently disclosed welding wires embodiments examples E1-E14 provide low FGRs as well as low MnFGRs.

**Table 7.** Fume generation rates (FGR) and manganese fume generation rate (MnFGR) in grams per min (g/min) for standard welding wires and disclosed welding wire embodiments using the indicated shielding gas, amperage, and voltage (DCEP). Testing was performed according to AWS F1.2:2006 using 0.045" diameter wire and a melt rate of approximately 7 lbs/hour (approximately 53-54 g/min).

| Welding Wire | 200 A / 27.0 V | | 225 A / 27.5 V | | 250 A / 28.0 V | | 275 A / 28.5 V | | 300 A / 29.0 V | |
|---|---|---|---|---|---|---|---|---|---|---|
| | FGR | MnFGR | FGR | MnFGR | FGR | MnFGR | FGR | MnFGR | FGR | MnFGR |
| AWS A5.20: E71T-1C (100% $CO_2$) | 0.4307 | 0.0383 | 0.4813 | 0.0361 | 0.5861 | 0.0416 | 0.6725 | 0.0437 | 0.6508 | 0.0397 |
| E1 (100% $CO_2$) | 0.5945 | 0.0083 | 0.7229 | 0.0101 | 0.7523 | 0.0120 | 0.8237 | 0.0132 | 0.8663 | 0.0182 |
| E3; E9 (100% $CO_2$) | 0.4742 | 0.0066 | 0.4648 | 0.0060 | 0.6368 | 0.0089 | 0.7615 | 0.0114 | 0.7111 | 0.0128 |
| AWS A5.20: E71T-1M (75%Ar/25%$CO_2$) | 0.3978 | 0.0302 | 0.4406 | 0.0286 | 0.6064 | 0.0388 | 0.6401 | 0.0512 | 0.4917 | 0.0339 |
| E2 (75%Ar/25%$CO_2$) | 0.4267 | 0.0154 | 0.4687 | 0.0150 | 0.5812 | 0.0174 | 0.6095 | 0.0171 | 0.4440 | 0.0147 |
| E4; E10 (75%Ar/ 25%$CO_2$) | 0.3337 | 0.0043 | 0.4092 | 0.0045 | 0.5710 | 0.0074 | 0.6125 | 0.0086 | 0.4565 | 0.0082 |
| AWS A5.29: E81T1-K2CJ H8 (100% $CO_2$) | 0.4861 | 0.0262 | 0.5741 | 0.0350 | 0.7507 | 0.0435 | 0.8830 | 0.0512 | 0.8172 | 0.0482 |
| AWS A5.29: E81T1-K2MJ H8 (100% $CO_2$) | 0.5482 | 0.0378 | 0.6300 | 0.0365 | 0.7995 | 0.0416 | 0.9925 | 0.0466 | 0.8541 | 0.0512 |
| E7 (100% $CO_2$) | 0.5639 | 0.0085 | 0.6070 | 0.0079 | 0.8214 | 0.0131 | 0.8653 | 0.0130 | 0.8080 | 0.0145 |
| AWS A5.29: 81T1-K2MJ H8 (75%Ar/25%$CO_2$) | 0.4721 | 0.0321 | 0.5644 | 0.0316 | 0.7245 | 0.0464 | 0.8600 | 0.0447 | 0.7029 | 0.0422 |
| E8 (75%Ar/25%$CO_2$) | 0.4050 | 0.0122 | 0.4147 | 0.0116 | 0.5385 | 0.0172 | 0.6105 | 0.0165 | 0.5579 | 0.0162 |

Table 8 further illustrates an effect of the shielding gas on the FGR for the disclosed welding electrodes. In particular, Table 8 illustrates FGR for a standard welding wire in comparison to disclosed welding wire embodiments E10, E11, and example E12 using different shielding gas mixtures. As indicated in Table 8, a standard welding electrode (e.g., a standard E71T-1M electrode) may have a FGR of 0.61 g/min, resulting in 0.7% of the electrode being converted to fumes. By moving to the disclosed welding electrode E10 under the same shielding gas conditions, the FGR may be reduced to 0.58 g/min. Additionally, when using the disclosed welding electrode E11 and a 90% Ar / 10% $CO_2$ shielding gas, the FGR may be reduced to 0.40 g/min (e.g., with 0.5% of the electrode converted to fumes); and when using the disclosed welding electrode E12 and the 90% Ar / 10% $CO_2$ shielding gas, the FGR may be reduced to 0.34 g/min (e.g., 0.42% of the electrode converted to fumes). Further, certain embodiments of the presently disclosed tubular welding wire 50 may generally enable high melt rates (e.g., greater than approximately 53 g/min, greater than approximately 54 g/min, etc.) while maintaining the aforementioned low FGRs. As such, while other welding wires may have FGRs greater than 0.5 g/min or greater than 0.6 g/min, which may correspond to a conversion of 0.7% or more of the welding wire (by weight) into welding fumes, the presently disclosed welding system may enable FGRs corresponding to a conversion of less than 0.6%, less than 0.5%, or less than 0.45% of the welding wire into fumes. Accordingly, Table 8 illustrates that certain embodiments of the presently disclosed welding system 10 may provide FGRs that are between 30% and 40% lower than the FGR of a standard (e.g., AWS A5.20: E71T1-1C) welding electrode with certain shielding gases. Indeed, in certain embodiments, the disclosed welding electrode 50 may provide melt rates as high as 80 g/min while maintaining a fume generation rate of 0.4 g/min (e.g., with 0.5% of the electrode converted to fumes) or 0.35 g/min (e.g., with 0.4% of the electrode converted to fumes) with the appropriate shielding gas (e.g., 90% Ar / 10% $CO_2$).

Table 8. Fume generation rates (FGR) for a standard welding wire and welding wire embodiments E10, E11, and E12 using the indicated shielding gas, amperage, and voltage (DCEP). Testing was performed according to AWS F1.2:2006 using 0.045" diameter wire.

|  | AWS A5.20: E71T-1M | E10 | E11 | E12 |
|---|---|---|---|---|
| Amperage | 250 | 250 | 250 | 250 |
| Voltage | 27 | 27 | 26 | 26 |
| Shielding Gas | 75% Ar / 25% $CO_2$ | 75% Ar / 25% $CO_2$ | 90% Ar / 10% $CO_2$ | 90% Ar / 10% $CO_2$ |
| FGR (g/min) | 0.6064 | 0.5812 | 0.4043 | 0.3387 |
| % Electrode to Fumes | 0.7 | 0.74 | 0.5 | 0.42 |
| Melt Rate (g/min) | 53-54 | 53-54 | 80 | 80 |
| Melt Rate (lbs/hour) | 7 | 7 | 10.6 | 10.6 |

FIG. 4 illustrates an embodiment of a process 80 by which the tubular welding wire 50 may be manufactured. It may be appreciated that the process 80 merely provides an example of manufacturing a tubular welding wire 50; however, in other embodiments, other methods of manufacturing may be used to produce the tubular welding wire 50 without spoiling the effect of the present approach. That is, for example, in certain embodiments, the tubular welding wire 50 may be formed via a roll-forming method or via packing the core composition into a hollow metallic sheath. The illustrated process 80 begins with a flat metal strip being fed (block 82) through a number of dies that shape the strip into a partially circular metal sheath 52 (e.g., producing a semicircle or trough). After the metal strip has been at least partially shaped into the metal sheath 52, it may be filled (block 84) with the filler (i.e., the granular core 54), such as the formulations EI-E14 for the granular core 54 filler discussed with respect to Table 1. That is, the partially shaped metal sheath 52 may be filled with various powdered alloying, arc stabilizing, slag forming, deoxidizing, and/or filling components. In certain embodiments, the disclosed tubular welding wire 50 may be completely free or substantially free of manganese or is a low manganese (e.g., less than 0.5% manganese by weight) welding wire. In other embodiments, the granular core 54 of the tubular welding wire 50 may be completely free or substantially free of manganese, and only the metal sheath 52 includes (e.g., 0.35%, 0.26%, or less) manganese.

Continuing through the process 80, once the components of the granular core material 54 have been added to the partially shaped metal sheath 52, the partially shaped metal sheath 52 may then be fed through (block 86) one or more devices (e.g., drawing dies or other suitable closing devices) that may generally close the metal sheath 52 such that it substantially surrounds the granular core material 54 (e.g., forming a seam 58). Additionally, the closed metal sheath 52 may subsequently be fed through (block 88) a number of devices (e.g., drawing dies or other suitable devices) to reduce the circumference of the tubular welding wire 50 by compressing the granular core material 54.

**Claims**

1. A tubular welding wire (50), comprising:

    - a metallic sheath (52) and a granular core (54), wherein the metallic sheath (52) is manufactured from a low carbon steel or a low-alloy steel, wherein the tubular welding wire (50) is configured to form a weld deposit on a structural steel workpiece (22),

    wherein the granular core (54) comprises less than or equal to 35% of the tubular welding wire (50) by weight; wherein the granular core (54) comprises:

       - 4-18 % alloying components by weight, consisting of 2-12 % nickel, 0-1,5 % copper, 0-1 % molybdenum, 0-1 % carbon, and less than 0,1 % manganese by weight,
       - 10-15 % arc stabilizing components by weight, consisting of 0-7,5 % iron oxides, 0-2 % potassium fluorosilicate, 0-12 % sodium titanate frit, and 0-6 % lithium oxide agglomerate by weight,
       - 25-50 % slag forming components by weight consisting of agglomerated $TiO_2$, wherein the $TiO_2$ used is a pigment-grade $TiO_2$,
       - 5-15 % deoxidizers by weight, consisting of 0-3 % aluminum, 0-3% magnesium, 0-4 % zirconium, and 0-6 % silicon by weight, and
       - 5-55 % filler metal by weight consisting of iron,

    wherein the welding wire (50) includes less than 0,5 % manganese by weight.

2. The tubular welding wire of claim 1,
   wherein the tubular welding wire (50) comprises less than 0,4% manganese by weight.

3. The tubular welding wire of one of the preceding claims,
   wherein the core (54) comprises between 16% and 25% of the tubular welding wire (50) by weight.

4. A method of manufacturing a tubular welding wire, comprising:

    - disposing a granular core (54) within a metallic sheath (52) to form the tubular welding wire,

    wherein the metallic sheath (52) is manufactured from a low carbon steel or a low-alloy steel,
    wherein the tubular welding wire is configured to form a weld deposit on a structural steel workpiece (22),
    wherein the granular core (54) comprises less than or equal to 35% of the tubular welding wire by weight;
    wherein the granular core (54) comprises:

       - 4-18 % alloying components by weight, consisting of 2-12 % nickel, 0-1,5 % copper, 0-1 % molybdenum, 0-1 % carbon, and less than 0,1 % manganese by weight,
       - 10-15 % arc stabilizing components by weight, consisting of 0-7,5 % iron oxides, 0-2 % potassium fluorosilicate, 0-12 % sodium titanate frit, and 0-6 % lithium oxide agglomerate by weight,
       - 25-50 % slag forming components by weight consisting of agglomerated $TiO_2$, wherein the TiO2 used is a pigment-grade TiO2,
       - 5-15 % deoxidizers by weight, consisting of 0-3 % aluminum, 0-3% magnesium, 0-4 % zirconium, and 0-6 % silicon by weight, and 5-55 % filler metal by weight consisting of iron,

    wherein the tubular welding wire includes less than 0,5 % manganese by weight.

5. The method of claim 4,
   wherein the tubular welding wire comprises a carbon equivalence (CE) determined according to the Ito and Bessyo method between 0.08 and 0.3, based on the following formula:

   $$CE = \%C + \%Si/30 + (\%Mn + \%Cu + \%Cr)/20 + \%Ni/60 + \%Mo/15 + \%V/10 + 5*\%B,$$

   wherein each of the elemental percentages are provided in weight percent relative to the total weight of the tubular welding wire.

6. The method of claim 4 or 5,
comprising forming an agglomerate by sintering a mixture comprising water, sodium silicate, silica, and manganous oxide, and mixing the agglomerate with at least one other component to form the granular core (54).

7. The method of claim 6,
wherein the mixture comprises between 15% and 17% water by weight, between 1% and 5% sodium silicate by weight, between 33% and 37% silica by weight, and between 44% and 49% manganous oxide by weight.

8. The method of claim 6 or 7,
wherein the agglomerate comprises silicon dioxide, manganous oxide, sodium oxide, aluminum oxide, and iron oxide after sintering.

9. The method of one of claims 6 to 8,
wherein the agglomerate comprises between 42% and 48% silicon dioxide by weight, between 48% and 54% manganous oxide by weight, less than 1% sodium oxide by weight, less than 2% aluminum oxide by weight, and less than 2% iron oxide by weight.

10. The method of one of claims 6 to 9,
wherein the agglomerate comprises less than 5% of the granular core (54) by weight.

11. The method of one of claims 6 to 10,
wherein the agglomerate comprises between 2% and 3% of the granular core (54) by weight.


**Patentansprüche**

1. Rohrförmiger Schweißdraht (50), der Folgendes umfasst:

   - eine Metallumhüllung (52) und einen granulären Kern (54), wobei die Metallumhüllung (52) aus einem niedriggekohlten Stahl oder niedriglegierten Stahl hergestellt ist, wobei der rohrförmige Schweißdraht (50) zur Bildung von Schweißgut auf einem Strukturwerkstück aus Stahl (22) ausgestaltet ist,

   wobei der granuläre Kern (54) 35 Gewichts-% oder weniger des rohrförmigen Schweißdrahts (50) umfasst; wobei der granuläre Kern (54) Folgendes umfasst:

   - 4-18 Gewichts-% Legierungsbestandteile, bestehend aus 2-12 Gewichts-% Nickel, 0-1,5 Gewichts-% Kupfer, 0-1 Gewichts-% Molybdän, 0-1 Gewichts-% Kohlenstoff und weniger als 0,1 Gewichts-% Mangan,
   - 10-15 Gewichts-% Lichtbogen stabilisierende Bestandteile, bestehend aus 0-7,5 Gewichts-% Eisenoxiden, 0-2 Gewichts-% Kaliumfluorsilicaten, 0-12 Gewichts-% Sinter-Natriumtitanat und 0-6 Gewichts-% Lithiumoxid-Agglomerat,
   - 25-50 Gewichts-% Schlacke bildende Bestandteile, bestehend aus agglomeriertem $TiO_2$, wobei es sich bei dem verwendeten $TiO_2$ um ein $TiO_2$ in Pigmentqualität handelt,
   - 5-15 Gewichts-% Desoxidationsmittel, bestehend aus 0-3 Gewichts-% Aluminium, 0-3 Gewichts-% Magnesium, 0-4 Gewichts-% Zirconium und 0-6 Gewichts-% Silicium und
   - 5-55 Gewichts-% Füllstoffmetall bestehend aus Eisen, wobei der Schweißdraht (50) weniger als 0,5 Gewichts-% Mangan enthält.

2. Rohrförmiger Schweißdraht nach Anspruch 1,
wobei der rohrförmige Schweißdraht (50) weniger als 0,4 Gewichts-% Mangan umfasst.

3. Rohrförmiger Schweißdraht nach einem der vorhergehenden Ansprüche,
wobei der Kern (54) zwischen 16 Gewichts-% und 25 Gewichts-% des rohrförmigen Schweißdrahts (50) umfasst.

4. Verfahren zur Herstellung eines rohrförmigen Schweißdrahts, umfassend:

   - Anordnen eines granulären Kerns (54) in einer Metallumhüllung (52) zur Bildung des rohrförmigen Schweißdrahts,

wobei die Metallumhüllung (52) aus einem niedriggekohlten Stahl oder niedriglegierten Stahl hergestellt ist, wobei der rohrförmige Schweißdraht zur Bildung von Schweißgut auf einem Strukturwerkstück aus Stahl (22) ausgestaltet ist,
wobei der granuläre Kern (54) 35 Gewichts-% oder weniger des rohrförmigen Schweißdrahts umfasst;
wobei der granuläre Kern (54) Folgendes umfasst:

- 4-18 Gewichts-% Legierungsbestandteile, bestehend aus 2-12 Gewichts-% Nickel, 0-1,5 Gewichts-% Kupfer, 0-1 Gewichts-% Molybdän, 0-1 Gewichts-% Kohlenstoff und weniger als 0,1 Gewichts-% Mangan,
- 10-15 Gewichts-% Lichtbogen stabilisierende Bestandteile, bestehend aus 0-7,5 Gewichts-% Eisenoxiden, 0-2 Gewichts-% Kaliumfluorsilicaten, 0-12 Gewichts-% Sinter-Natriumtitanat und 0-6 Gewichts-% Lithiumoxid-Agglomerat,
- 25-50 Gewichts-% Schlacke bildende Bestandteile, bestehend aus agglomeriertem $TiO_2$, wobei es sich bei dem verwendeten $TiO_2$ um ein $TiO_2$ in Pigmentqualität handelt,
- 5-15 Gewichts-% Desoxidationsmittel, bestehend aus 0-3 Gewichts-% Aluminium, 0-3 Gewichts-% Magnesium, 0-4 Gewichts-% Zirconium und 0-6 Gewichts-% Silicium und 5-55 Gewichts-% Füllstoffmetall bestehend aus Eisen, wobei der rohrförmige Schweißdraht weniger als 0,5 Gewichts-% Mangan enthält.

5. Verfahren nach Anspruch 4,
wobei der rohrförmige Schweißdraht ein Kohlenstoffäquivalent (Carbon Equivalence, CE) zwischen 0,08 und 0,3 umfasst, das mit der Methode nach Ito und Bessyo, basierend auf der folgenden Formel, bestimmt wurde: CE = %C+ %Si/30 + (%Mn+%Cu+%Cr)/20 + %Ni/60 + %Mo/15 + %V/10 + 5*%B,
wobei jeder der prozentualen Anteile der Elemente als Gewichtsprozent, bezogen auf das Gesamtgewicht des rohrförmigen Schweißdrahts, angegeben ist.

6. Verfahren nach Anspruch 4 oder 5,
umfassend das Bilden eines Agglomerats durch Sintern einer Wasser, Natriumsilicat, Silica und Mangan(II)oxid umfassenden Mischung und das Mischen des Agglomerats mit mindestens einem weiteren Bestandteil zur Bildung des granulären Kerns (54).

7. Verfahren nach Anspruch 6,
wobei die Mischung zwischen 15 Gewichts-% und 17 Gewichts-% Wasser, zwischen 1 Gewichts-% und 5 Gewichts-% Natriumsilicat, zwischen 33 Gewichts-% und 37 Gewichts-% Silica und zwischen 44 Gewichts-% und 49 Gewichts-% Mangan(II)oxid umfasst.

8. Verfahren nach Anspruch 6 oder 7,
wobei das Agglomerat nach dem Sintern Siliciumdioxid, Mangan(II)oxid, Natriumoxid, Aluminiumoxid und Eisenoxid umfasst.

9. Verfahren nach einem der Ansprüche 6 bis 8,
wobei das Agglomerat zwischen 42 Gewichts-% und 48 Gewichts-% Siliciumdioxid, zwischen 48 Gewichts-% und 54 Gewichts-% Mangan(II)oxid, weniger als 1 Gewichts-% Natriumoxid, weniger als 2 Gewichts-% Aluminiumoxid und weniger als 2 Gewichts-% Eisenoxid umfasst.

10. Verfahren nach einem der Ansprüche 6 bis 9,
wobei das Agglomerat weniger als 5 Gewichts-% des granulären Kerns (54) umfasst.

11. Verfahren nach einem der Ansprüche 6 bis 10,
wobei das Agglomerat zwischen 2 Gewichts-% und 3 Gewichts-% des granulären Kerns (54) umfasst.

**Revendications**

1. Fil de soudage tubulaire (50), comprenant :

- une gaine métallique (52) et une âme granulaire (54), la gaine métallique (52) étant fabriquée à partir d'un acier à faible teneur en carbone ou d'un acier faiblement allié, le fil de soudage tubulaire (50) étant conçu pour former un dépôt de soudure sur une pièce en acier de construction (22),

l'âme granulaire (54) constituant 35 % ou moins de 35 % du fil de soudage tubulaire (50) en poids ;
l'âme granulaire (54) comprenant :

- 4-18 % de composants d'alliage en poids, constitués de 2-12 % de nickel, 0-1,5 % de cuivre, 0-1 % de molybdène, 0-1 % de carbone et moins de 0,1 % de manganèse en poids,
- 10-15 % de composants de stabilisation d'arc en poids, constitués de 0-7,5 % d'oxydes de fer, 0-2 % de fluorosilicate de potassium, 0-12 % de fritte de titanate de sodium et 0-6 % d'agglomérat d'oxyde de lithium en poids,
- 25-50 % de composants de formation de laitier en poids constitués de $TiO_2$ aggloméré, le $TiO_2$ utilisé étant un $TiO_2$ de qualité pigmentaire,
- 5-15 % de désoxydants en poids, constitués de 0-3 % d'aluminium, 0-3 % de magnésium, 0-4 % de zirconium et 0-6 % de silicium en poids, et
- 5-55 % de métal d'apport en poids constitué de fer, le fil de soudage (50) renfermant moins de 0,5 % de manganèse en poids.

2. Fil de soudage tubulaire selon la revendication 1, le fil de soudage tubulaire (50) comprenant moins de 0,4 % de manganèse en poids.

3. Fil de soudage tubulaire selon l'une des revendications précédentes, l'âme (54) constituant entre 16 % et 25 % du fil de soudage tubulaire (50) en poids.

4. Procédé de fabrication d'un fil de soudage tubulaire, comprenant :

- la disposition d'une âme granulaire (54) à l'intérieur d'une gaine métallique (52) pour former le fil de soudage tubulaire,

la gaine métallique (52) étant fabriquée à partir d'un acier à faible teneur en carbone ou d'un acier faiblement allié, le fil de soudage tubulaire étant conçue pour former un dépôt de soudure sur une pièce en acier de construction (22), l'âme granulaire (54) constituant 35 % ou moins de 35 % du fil de soudage tubulaire en poids ; l'âme granulaire (54) comprenant :

- 4-18 % de composants d'alliage en poids, constitués de 2-12 % de nickel, 0-1,5 % de cuivre, 0-1 % de molybdène, 0-1 % de carbone et moins de 0,1 % de manganèse en poids,
- 10-15 % de composants de stabilisation d'arc en poids, constitués de 0-7,5 % d'oxydes de fer, 0-2 % de fluorosilicate de potassium, 0-12 % de fritte de titanate de sodium et 0-6 % d'agglomérat d'oxyde de lithium en poids,
- 25-50 % de composants de formation de laitier en poids constitués de $TiO_2$ aggloméré, le $TiO_2$ utilisé étant un $TiO_2$ de qualité pigmentaire,
- 5-15 % de désoxydants en poids, constitués de 0-3 % d'aluminium, 0-3 % de magnésium, 0-4 % de zirconium et 0-6 % de silicium en poids, et
- 5-55 % de métal d'apport en poids constitué de fer, le fil de soudage tubulaire renfermant moins de 0,5 % de manganèse en poids.

5. Procédé selon la revendication 4, le fil de soudage tubulaire comprenant un équivalent carbone (CE) déterminé selon la méthode d'Ito et Bessyo compris entre 0,08 et 0,3, sur la base de la formule suivante :

CE = %C + %Si/30 + (%Mn + %Cu + %Cr)/20 + %Ni/60 + %Mo/15 + %V/10 + 5*%B,
chacun des pourcentages élémentaires étant fourni en pourcentage en poids par rapport au poids total du fil de soudage tubulaire.

6. Procédé selon la revendication 4 ou 5, comprenant la formation d'un agglomérat par frittage d'un mélange comprenant de l'eau, du silicate de sodium, de la silice et de l'oxyde manganeux et le mélange de l'agglomérat avec au moins un autre composant pour former l'âme granulaire (54).

7. Procédé selon la revendication 6,

le mélange comprenant entre 15 % et 17 % d'eau en poids, entre 1 % et 5 % de silicate de sodium en poids, entre 33 % et 37 % de silice en poids et entre 44 % et 49 % d'oxyde manganeux en poids.

8. Procédé selon la revendication 6 ou 7, l'agglomérat comprenant du dioxyde de silicium, de l'oxyde manganeux, de l'oxyde de sodium, de l'oxyde d'aluminium et de l'oxyde de fer après frittage.

9. Procédé selon l'une des revendications 6 à 8, l'agglomérat comprenant entre 42 % et 48 % de dioxyde de silicium en poids, entre 48 % et 54 % d'oxyde manganeux en poids, moins de 1 % d'oxyde de sodium en poids, moins de 2 % d'oxyde d'aluminium en poids et moins de 2 % d'oxyde de fer en poids.

10. Procédé selon l'une des revendications 6 à 9, l'agglomérat constituant moins de 5 % de l'âme granulaire (54) en poids.

11. Procédé selon l'une des revendications 6 à 10, l'agglomérat constituant entre 2 % et 3 % de l'âme granulaire (54) en poids.

FIG. 1

FIG. 2

EP 3 071 364 B1

```
                                                                    ⟋⎯ 60
┌──────────────────────────────────────────────┐
│         FEEDING  THE  TUBULAR  WELDING         │
│    ELECTRODE  TO  THE  WELDING  APPARATUS      │⎯ 62
└──────────────────────────────────────────────┘
                        │
                        ▼
┌──────────────────────────────────────────────┐
│         FEEDING  A  SHIELDING  GAS  FLOW       │
│         TO  THE  WELDING  APPARATUS            │⎯ 64
└──────────────────────────────────────────────┘
                        │
                        ▼
┌──────────────────────────────────────────────┐
│      BRINGING  THE  WELDING  APPARATUS  NEAR  THE │
│  WORKPIECE  TO  STRIKE  AND  SUSTAIN  AN  ARC  BETWEEN │⎯ 66
│  THE  TUBULAR  WELDING  ELECTRODE  AND  THE  WORKPIECE │
└──────────────────────────────────────────────┘
                        │
                        ▼
┌──────────────────────────────────────────────┐
│  TRANSFERRING  A  PORTION  OF  THE  THE  TUBULAR  WELDING │
│   ELECTRODE  TO  THE  WELD  POOL  ON  THE  SURFACE  OF  THE │⎯ 68
│  WORKPIECE  TO  FORM  A  WELD  BEAD  OF  THE  WELD  DEPOSIT │
└──────────────────────────────────────────────┘
                        │
                        ▼
┌──────────────────────────────────────────────┐
│   RELEASING  ARC  STABILIZERS, SLAG  FORMERS, AND / │
│     OR  DEOXIDIZERS  FROM  THE  TUBULAR  WELDING │
│ ELECTRODE  TO  CONTROL  THE  ELECTRICAL  CHARACTERISTICS │⎯ 70
│  OF  THE  ARC  AND  THE  CHEMICAL  AND  MECHANICAL │
│         PROPERTIES  OF  THE  WELD  DEPOSIT      │
└──────────────────────────────────────────────┘
```

FIG. 3

```
                                                                    ⟋⎯ 80
┌──────────────────────────────────────────────┐
│  FEEDING  THE  FLAT  METAL  STRIP  THROUGH  ONE  OR │
│  MORE  DIES  TO  PARTIALLY  SHAPE  THE  METAL  SHEATH │⎯ 82
└──────────────────────────────────────────────┘
                        │
                        ▼
┌──────────────────────────────────────────────┐
│    FILL  THE  PARTIALLY  SHAPED  METAL  SHEATH  WITH │
│          THE  FILLER, WHICH  INCLUDES          │
│  VARIOUS  ALLOYING, ARC  STABILIZING, SLAG  FORMING, │⎯ 84
│    DEOXIDIZING, AND / OR  FILING  COMPONENTS   │
└──────────────────────────────────────────────┘
                        │
                        ▼
┌──────────────────────────────────────────────┐
│        FEEDING  THE  FILLED, PARTIALLY  SHAPED │
│       METAL  SHEATH  THROUGH  ONE  OR  MORE    │
│        DEVICES  TO  CLOSE  THE  METAL  SHEATH  │⎯ 86
└──────────────────────────────────────────────┘
                        │
                        ▼
┌──────────────────────────────────────────────┐
│   FEEDING  THE  CLOSED  TUBULAR  WELDING  ELECTRODE │
│    THROUGH  ONE  OR  MORE  DEVICES  TO  REDUCE  THE │
│ CIRCUMFERENCE  OF  THE  TUBULAR  WELDING  ELECTRODE  AND │⎯ 88
│             COMPACT  THE  FILLER               │
└──────────────────────────────────────────────┘
```

FIG. 4

**EP 3 071 364 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3513289 A
- EP 1226897 A2